# EUROPÄISCHE PATENTSCHRIFT

(11) **EP 1 885 278 B1**
(45) Veröffentlichungstag und Bekanntmachung des Hinweises auf die Patenterteilung: **21.01.2009**
(21) Anmeldenummer: 06705864.4
(22) Anmeldetag: 31.01.2006
(51) Int. Cl.: A61C 13/00

(54) **VERFAHREN ZUR HERSTELLUNG VON ZAHNTEILEN AUS DENTALMETALLPULVER**
METHOD FOR PRODUCING TOOTH PARTS FROM DENTAL-GRADE METAL POWDER
PROCEDE DE FABRICATION D'IMPLANTS DENTAIRES A PARTIR D'UNE POUDRE D'ALLIAGE DENTAIRE

(30) Priorität: 03.06.2005 DE 102005025589; 02.11.2005 DE 102005052113
(43) Veröffentlichungstag der Anmeldung: 13.02.2008
(73) Patentinhaber: WDT-Wolz-Dental-Technik GmbH, 67059 Ludwigshafen (DE)
(72) Erfinder: Wolz, Stefan, 55566 Bad Sobernheim (DE)
(74) Vertreter: Götz, Georg Alois
(86) Internationale Anmeldenummer: PCT/DE2006/000134
(87) Internationale Veröffentlichungsnummer: WO 2006/128404

(56) Entgegenhaltungen:
- EP-A- 1 250 895
- WO-A-99/50480
- DE-A1- 10 049 974
- DE-A1- 19 812 664

## Beschreibung

Die Erfindung betrifft ein Verfahren zur Herstellung von Zahnteilen aus Dentalmetallpulver.

Bei der Herstellung von Käppchen für Einzelzähne, Gerüste für Brücken und Vollmetallkronen wird nach wie vor überwiegend die Wachsausschmelz - technik eingesetzt, bei der auf einem Arbeitsmodell eine Wachsform modelliert wird, deren Form dem zu gießenden Gegenstand entspricht. Mit Hilfe dieses Wachsmodells wird der Hohlraum in einer Gießform gebildet, der anschließend mit Metall ausgegossen wird. Da dieses Verfahren sehr aufwendig ist, wurden schon einige Versuche unternommen, durch Sintern von Metallpulver zu der gewünschten Form zu gelangen.

Gemäß der FR-2 660 224 A1 wird das Modell eines Zahnstumpfes mit einer Platinfolie formgerecht überzogen, auf die ein Klebstoff aufgebracht wird, auf den eine Schicht von Nickel-Chrom-Kügelchen mit Durchmessern von 50 bis 300 µm aufgebracht wird. Durch Erhitzen erfolgt dann eine Art Sinterung. Das gesinterte Käppchen kann dann von der Platinfolie entfernt werden.

Die US-5 362 438 , die als der nächstliegende stand der Technik betrachtet wird, A lehrt das Einmischen von Metallpulver in z.B. Propylenglykol zur Herstellung einer Paste, die auf ein feuerfestes Modell aufgetragen wird, auf dem es gesintert wird. Als Material für das Metallpulver ist u.a. Titan angeben, das mit einer Metallschutzschicht (Palladium) überzogen ist, um beim Sintern gegen Oxidation zu schützen.

Ein weiters Verfahren zur Herstellung von Zahnteilen aus Metallpulver ist das Freiform-Lasersintern, wie es in der EP 1 358 855 A1 und der EP 1 021 997 A1 beschrieben ist.

Alle bisherigen Verfahren konnten sich aber gegenüber dem Wachsausschmelzverfahren nicht durchsetzen. Ein Grund hierfür liegt in dem ähnlichen Arbeitsaufwand und den erhöhten Kosten.

In den letzten Jahren hat die Elektrophorese bei der Herstellung von vollkeramischen Kronen und Brücken stark an Bedeutung gewonnen. Als Vertreter dieser Technologie werden folgende Druckschriften genannt: WO 99/50 480 A1, DE 100 21 437 A1, DE 101 27 144 A1, DE 103 39 603 A1, WO 2004/04 1113 A1. Da das Ziel dieser Erfindungen die Herstellung vollkeramischer Zahnprothesen ist, ist die Einbeziehung von dentalem Metallpulver als Material für Zahnprothesen bei diesen bekannten Verfahren zunächst ausgeschlossen. Auch konnte nicht erwartet werden, daß sich Metallpulver durch Elektrophorese auftragen läßt, da wegen der Leitfähigkeit des Metalls Kurzschlüsse in der Elektrophoresezelle wahrscheinlich erscheinen

Es ist daher Aufgabe der im Anspruch 1 angegebenen Erfindung, ein einfaches Verfahren zur Herstellung von Zahnteilen aus Dentalmetall bereitzustellen.
Vorteilhafte Ausführungen der Erfindung sind in den abhängigen Ansprüchen 2 bis 13 beschrieben.

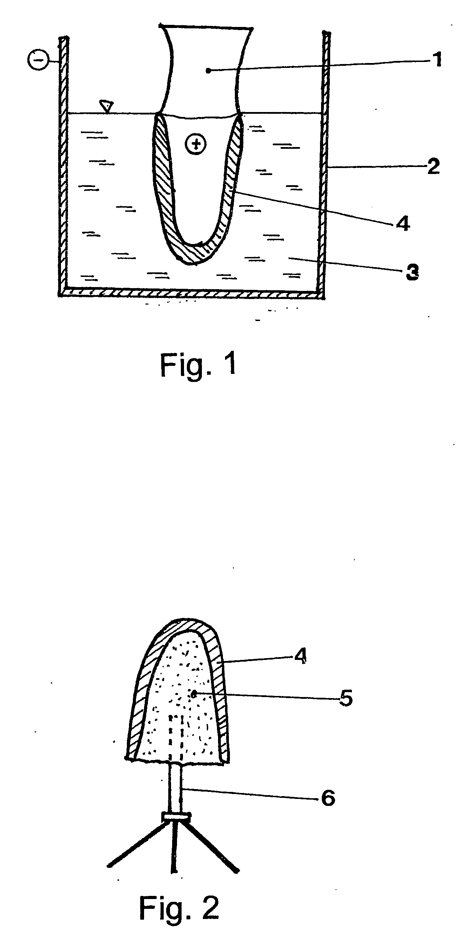

Die Erfindung wird anhand eines Beispiels und den Figuren 1 und 2 näher erläutert.

Es zeigen:
Figur 1 die elektrophoretische Beschichtung eines Zahnstumpfmodells;
Figur 2 ein auf einem Brennträger befindliches Käppchen.

In Figur 1 ist schematisch eine an sich bekannte Vorrichtung zur elektrophoretischen Beschichtung von Zahnmodellen gezeigt. Ein Stumpf 1 eines Arbeitsmodells oder wahlweise eines dublierten Modells taucht in eine Suspension 3 aus einer Flüssigkeit und einem dentalen Metallpulver ein, die sich in einem leitenden Gefäß 2 befindet. Durch Anlegen einer Spannung erfolgt ein Niederschlag, der der Form eines Käppchens entspricht. In einem konkreten Fall werden hierzu die nachstehend beschriebenen Maßnahmen getroffen.

Es wird zunächst das Modell 1 aus Gips oder einem anderen geeigneten Material hergestellt und mit einem Trennmittel dünn beschichtet, damit ein erleichtertes Abziehen des noch nicht gesinterten Käppchens gewährleistet ist. Ein geeignetes Trennmittel ist in der DE 198 12 664 A1 beschrieben. Das Trennmittel wird anschließend mit einer leitfähigen Schicht, z.B. einem üblichen Silberlack, überzogen, um die Leitfähigkeit für die Elektrophorese sicherzustellen.

Bei der Suche nach einem geeigneten Suspensionsmittel hat sich herausgestellt, daß reines oder fast reines Wasser, im Gegensatz zur Elektrophorese von Keramikpulver, nicht geeignet ist. Für die Elektrophorese von Metallpulver hat sich Petrolite D-900 (eingetr. Warenzeichen der Firma Baker Hughes) als besonders geeignet erwiesen. Petrolite D-900 besteht aus 30 - 60 Gew.% mikrokristallinem Wachs, 5 - 10 Gew.% ethoxylierten Alkoholen mit mehr als 14 C-Atomen in der Kette und 30- 60 Gew.% Wasser.

Als Metallpulver wurde ein Metallpulver mit dem Namen Nicrobraz 135 (eingetr. Warenzeichen der Firma Wall Colmonoy Corp.) eingesetzt. Es ist eine Nickelverbindung mit 1,9 % B, 3,5 % Si und max. 0,06 % C. Die Partikelgröße liegt bei 2 - 3 µm.

Nach Herstellung einer Suspension aus Petrolite und ca. 20 Gew. % Nicrobaz erfolgte die Elektrophorese bei 30 bis 40 V und 20 bis 90 mA, die innerhalb von Sekunden zur Ausbildung eines Käppchens auf dem Modellstumpf führte. Dank des Trennmittels kann das noch sehr fragile Käppchen vom Stumpf abgehoben werden. Das Innere des Käppchens wird dann mit der Einbettmasse 5, wie in Figur 2 gezeigt, gefüllt und auf einen Brennträger 6 aufgesetzt. Nach einer Sinterung bei 1125°C und einer Sinterungsdauer von 8 - 10 min bildet sich ein vollgebrauchsfähiges Käppchen. Die Sintertemperatur richtet sich selbstverständlich nach dem Material und darf die Schmelztemperatur nicht überschreiten.

Es hat sich gezeigt, daß die Stabilisierung des Zahnteils 4 nicht notwendigerweise auf einem Brennträger erfolgen muß. Wenn es sich bei dem Modell 1 um ein dubliertes Modell handelt, kann das Zahnteil selbstverständlich auf dem dublierten Modell während des Sintervorgangs verbleiben, was allerdings die Zerstörung des dublierten Modells nach sich zieht. Die Dublierung des Arbeitsmodells ist allerdings mit anderen Nachteilen wie Formfehler und Mehrarbeit behaftet.

Da beim Sintern die meisten Metalle der Oxidation unterliegen, empfiehlt es sich, das Sintern entweder unter Vakuum oder Schutzgas wie Argon durchzuführen oder das Keramikpulver bzw. das vorgeformte Gerüst mit einem üblichen Oxidationsstopplack zu überziehen.

Eine dritte Möglichkeit der Sinterung besteht darin, daß man das Zahnteil in eine mit Einbettmasse gefüllte Muffel eingibt. Aufgrund des höheren spezifischen Gewichtes versinkt das Zahnteil in der Einbettmasse. Die Muffel wird dann in einem Ofen gesintert. Die Entnahme des gesinterten Zahnteils aus der Muffel und die Reinigung des Zahnteils von der Einbettmasse bereitet keine Schwierigkeit.

Anstelle der dem Zahntechniker bekannten Einbettmasse kann auch ein temperaturbeständiges Pulver benutzt werden. Besonders geeignet hat sich eine Mischung aus Alumina- und Graphitpulver mit 5 bis 50 % Graphitanteil. Das Graphit verhindert hierbei die Oxidation des Metalls. Vor dem Sintervorgang empfiehlt sich noch eine Verdichtung des Pulvers durch Aufbringen eines Druckes, beispielsweise mit einem Druckstempel.

Das erfindungsgemäße Verfahren ist für alle gebräuchlichen Dentalmetalle, insbesondere solche auf Goldbasis, anwendbar. Der besondere Vorteil des erfindungsgemäßen Verfahrens liegt darin, daß es bei entsprechender Adaption für alle, eigentlich für die Herstellung von vollkeramischen Zahnteilen entwickelten Elektrophoreseverfahren anwendbar ist. Stellvertretend für diese Verfahren sei nur die oben zitierte WO 2004/041113 A1 genannt, die ein einfaches Herstellen von Brückengerüsten erlaubt.

## Patentansprüche

1. Verfahren zur Herstellung vor metallischen Zahnteilen aus Dentalmetallpulver, wobei;
auf ein Modell (1) durch Elektrophorese aus einer Suspensionsflüssigkeit eine Metallpulverschicht niedergeschlagen wird, die die Form des gewünschten Zahnteils (4) aufweist und das Zahnteil (4) für den Sintervorgang stabilisiert wird, indem es
a) auf einem Brennträger (6) fixiert wird,
oder
b) auf einem dublierten Modell verbleibt,
oder
c) in eine mit Einbettmasse oder temperaturbeständigem Pulver gefüllte Muffel eingelegt wird.

2. Verfahren nach Anspruch 1, daß die Suspensionsflüssigkeit aus 30 - 60 Gew.% mikrokristallinem Wachs, 5 - 10 Gew.% ethoxylierten Alkoholen mit mehr als 14 C-Atomen und 30 - 60 Gew.% Wasser besteht.

3. Verfahren nach einem der Ansprüche 1 oder 2, **dadurch gekennzeichnet, daß** das Modell mit einer Trennschicht beschichtet wird.

4. Verfahren nach Anspruch 3, **dadurch gekennzeichnet, daß** auf die Trennschicht eine leitfähige Schicht aufgetragen wird.

5. Verfahren nach einem der Ansprüche 1 bis 4, **gekennzeichnet durch** eine Partikelgröße des Metallpulvers von 1 bis 10 µm.

6. Verfahren nach einem der Ansprüche 1 bis 5, **dadurch gekennzeichnet, daß** die Elektrophorese bei 30 - 40 V durchgeführt wird.

7. Verfahren nach einem der Ansprüche 1 bis 6, **dadurch gekennzeichnet, daß** die Elektrophorese bei 20 - 90 mA durchgeführt wird.

8. Verfahren nach einem der Ansprüche 1 bis 7, **gekennzeichnet durch** Gold als Basismetall für das Dentalmetallpulver.

9. Verfahren nach einem der Ansprüche 1 bis 8, **dadurch gekennzeichnet, daß** das Zahnteil ein Käppchen (4) oder eine Brücke ist.

10. Verfahren nach einem der Ansprüche 1 bis 9, **dadurch gekennzeichnet, daß** unter Vakuum gesintert und/oder das Metallpulver mit einen Oxidationsstopplack überzogen wird.

11. Verfahren nach einem der Ansprüche 1 bis 10, **dadurch gekennzeichnet, daß** die Sinterung unter Schutzgas erfolgt.

12. Verfahren nach einem der Ansprüche 1 bis 11, **dadurch gekennzeichnet, daß** das temperaturbeständige Pulver eine Mischung aus einem Metalloxyd und einem sauerstoffverbrauchendem Pulver besteht.

13. Verfahren nach Anspruch 12, **dadurch gekennzeichnet, daß** eine Mischung aus Alumina- und Graphitpulver verwendet wird.

## Claims

1. Method of producing metal tooth parts from dental-grade metal powder wherein a metal powder layer is deposited on a model (1) by electrophoresis from a suspension fluid, which layer has the shape of the desired tooth part (4) and the tooth part (4) is stabilised for the sintering process in that it
a) is fixed on a burning support (6), or
b) remains on a plated model, or
c) is inserted into a muffle filled with packing compound or temperature-resistant powder.

2. Method according to claim 1, **characterised in that** the suspension fluid consists of 30-60 % by weight microcrystalline wax, 5-10 % by weight ethoxylated alcohols with more than 14 C atoms and 30-60 % by weight water.

3. Method according to either of claims 1 or 2, **characterised in that** the model is coated with a separation layer.

4. Method according to claim 3, **characterised in that** a conductive layer is applied to the separation layer.

5. Method according to one of claims 1 to 4, **characterised by** a particle size of the metal powder of 1 to 10 µm.

6. Method according to one of claims 1 to 5, **characterised in that** electrophoresis is carried out at 30-40 V.

7. Method according to one of claims 1 to 6, **characterised in that** electrophoresis is carried out at 20-90 mA.

8. Method according to one of claims 1 to 7, **characterised by** gold as a base metal for the dental-grade metal powder.

9. Method according to one of claims 1 to 8, **characterised in that** the tooth part is a cap (4) or a bridge.

10. Method according to one of claims 1 to 9, **characterised in that** sintering is carried out in a vacuum and/or the metal powder is coated with an oxidation-preventing lacquer.

11. Method according to one of claims 1 to 10, **characterised in that** sintering is carried out in a protective gas.

12. Method according to one of claims 1 to 11, **characterised in that** the temperature-resistant powder consists of a mixture of a metal oxide and an oxygen-consuming powder.

13. Method according to claim 12, **characterised in that** a mixture of alumina and graphite powder is used.

## Revendications

1. Procédé pour fabriquer des éléments métalliques pour dents à partir de poudre métallique dentaire,
selon lequel
sur un modèle (1) est déposée par électrophorèse, à partir d'un liquide de suspension, une couche de poudre métallique, qui présente la forme de l'élément pour dents (4) souhaité, et l'élément pour dents (4) est stabilisé pour le processus de frittage
a) en étant fixé sur un support de cuisson (6),
ou
b) en demeurant sur un modèle produit en plusieurs exemplaires,
ou
c) en étant inséré dans un moufle rempli de matière d'enrobage ou de poudre résistant à la température.

2. Procédé selon la revendication 1, **caractérisé en ce que** le liquide de suspension se compose de 30 à 60 % en poids de cire microcristalline, de 5 à 10 % en poids d'alcools éthoxylés ayant plus de 14 atomes de C, et de 30 à 60 % en poids d'eau.

3. Procédé selon l'une des revendications 1 ou 2, **caractérisé en ce que** le modèle est revêtu d'une couche de séparation.

4. Procédé selon la revendication 3, **caractérisé en ce que** sur la couche de séparation est appliquée une couche conductrice.

5. Procédé selon l'une des revendications 1 à 4, **caractérisé par** une taille de particules de 1 à 10 µm de la poudre métallique.

6. Procédé selon l'une des revendications 1 à 5, **caractérisé en ce que** l'électrophorèse est effectuée à 30-40 V.

7. Procédé selon l'une des revendications 1 à 6, **caractérisé en ce que** l'électrophorèse est effectuée à 20-90 mA.

8. Procédé selon l'une des revendications 1 à 7, **caractérisé par** de l'or comme métal de base pour la poudre métallique dentaire.

9. Procédé selon l'une des revendications 1 à 8, **caractérisé en ce que** l'élément pour dents est une couronne (4) ou un bridge.

10. Procédé selon l'une des revendications 1 à 9, **caractérisé en ce que** le frittage est réalisé sous vide et/ou la poudre métallique est enduite d'une laque anti-oxydation.

11. Procédé selon l'une des revendications 1 à 10, **caractérisé en ce que** le frittage se fait sous gaz protecteur.

12. Procédé selon l'une des revendications 1 à 11, **caractérisé en ce que** la poudre résistant à la température consiste en un mélange d'un oxyde de métal et d'une poudre consommant de l'oxygène.

13. Procédé selon la revendication 12, **caractérisé en ce qu'**un mélange de poudre d'alumine et de poudre de graphite est employé.
